# EUROPÄISCHE PATENTSCHRIFT

(11) **EP 2 906 730 B1**
(45) Veröffentlichungstag und Bekanntmachung des Hinweises auf die Patenterteilung: **05.12.2018**
(21) Anmeldenummer: 13799193.1
(22) Anmeldetag: 09.10.2013
(51) Int. Cl.: C22B 7/00, C22B 26/12

(54) **VERFAHREN ZUR HYDROMETALLURGISCHEN RÜCKGEWINNUNG VON LITHIUM, NICKEL, KOBALT AUS DER LITHIUM-ÜBERGANGSMETALLOXID HALTIGEN FRAKTION GEBRAUCHTER GALVANISCHER ZELLEN**
METHOD FOR THE HYDROMETALLURGICAL RECOVERY OF LITHIUM, NICKEL AND COBALT FROM THE LITHIUM TRANSITION METAL OXIDE-CONTAINING FRACTION OF USED GALVANIC CELLS
PROCÉDÉ DE RÉCUPÉRATION HYDROMÉTALLURGIQUE DE LITHIUM, DE NICKEL ET DE COBALT À PARTIR DE LA FRACTION DE CELLULES GALVANIQUES USAGÉES CONTENANT DE L'OXYDE DE MÉTAUX DE TRANSITION DE LITHIUM

(30) Priorität: 10.10.2012 DE 102012218465; 10.10.2012 DE 102012218464; 10.10.2012 DE 102012218467
(43) Veröffentlichungstag der Anmeldung: 19.08.2015
(73) Patentinhaber: Albemarle Germany GmbH, 65926 Frankfurt am Main (DE)
(72) Erfinder: WOHLGEMUTH, David, 65936 Frankfurt (DE); SCHNEIDER, Mark Andre, 61381 Friedrichsdorf-Burgholzhausen (DE); SPEILAU, Rebecca, 65817 Eppstein (DE); WILLEMS, Johannes, 60489 Frankfurt (DE); STEINBILD, Martin, 60322 Frankfurt (DE)
(74) Vertreter: Rottmayer, Hans
(86) Internationale Anmeldenummer: PCT/EP2013/003028
(87) Internationale Veröffentlichungsnummer: WO 2014/056609

(56) Entgegenhaltungen:
- WO-A2-2012/050317
- DE-A1- 19 842 658
- FR-A1- 2 796 207
- SHIN S M ET AL: "Development of a metal recovery process from Li-ion battery wastes", HYDROMETALLURGY, ELSEVIER SCIENTIFIC PUBLISHING CY. AMSTERDAM, NL, Bd. 79, Nr. 3-4, 1. Oktober 2005 (2005-10-01), Seiten 172-181, XP027652559, ISSN: 0304-386X [gefunden am 2005-10-01]

## Beschreibung

Gegenstand der Erfindung ist ein Verfahren zur hydrometallurgischen Rückgewinnung von Lithium, Nickel, Kobalt aus der Lithium-Übergangsmetalloxid haltigen Fraktion gebrauchter galvanischer Zellen.

Mobile elektronische Geräte benötigen zur unabhängigen Stromversorgung immer leistungsfähigere wieder aufladbare Batterien. Für diese Zwecke werden wegen ihrer Energiedichte ausgedrückt in Wh/kg, der Zyklenbeständigkeit und der geringen Selbstentladung Lithium-Ionen-Batterien eingesetzt. Sehr weitverbreitet sind Lithium-Ionen-Batterien mit Übergangsmetalloxiden als aktives Kathodenmaterial. Das aktive Kathodenmaterial in diesen Batterien besteht aus Lithium- Übergangsmetalloxiden, aus denen beim Ladevorgang Lithiumionen freigesetzt und in das Anodenmaterial interkaliert werden. Von besonderer Bedeutung sind die Mischoxide des Lithiums mit denen des Nickels, Kobalts und/oder Mangans, die auch unter der Abkürzung NMC-Zellen oder -Batterien bekannt sind sowie die Mischoxide des Lithiums mit denen des Nickels, Kobalts und/oder Aluminiums, die auch unter der Abkürzung NCA-Zellen oder -Batterien bekannt sind. Großformatige Lithiumakkumulatoren werden für stationäre Anwendungen (power back-up) oder im Automobilbereich für Traktionszwecke (Hybridantriebe oder reinelektrischen Antrieb) eingesetzt. Im Hinblick auf die Energiedichte bei letztgenannten Anwendungen wird NMC -Batterien eine überragende Bedeutung eingeräumt. Da mit der Größe und der Anzahl der hergestellten, ge- und anschließend verbrauchten Batterien die Menge der darin enthaltenen Wertstoffe wächst, ist ein ökonomisches Verfahren zur Rückgewinnung des in den Batterien enthaltenen Lithiums erforderlich.

Aus dem Dokument WO 2012/072619 A1 ist ein Verfahren zur Rückgewinnung von Lithium aus der LiFePO₄-haltigen Fraktion geschredderter und gesichteter Zellen bekannt, bei dem die LiFePO₄-haltige Fraktion mit Säurelösung in Gegenwart eines Oxidationsmittels behandelt wird. Die herausgelösten Lithiumionen werden vom ungelösten Eisenphosphat abgetrennt und aus der Lithium haltigen Lösung als Salz gefällt. Die hydrometallurgische Aufarbeitung erfolgt mit verdünnter Schwefelsäure unter Einleitung von Sauerstoff, Ozon oder Zusatz von Wasserstoffperoxid im Temperaturbereich von 80°C bis 120°C.

Nachteilig an diesem Verfahren ist die hohe Energieintensivität des Extraktionsprozesses, die hohen Anforderungen hinsichtlich der Korrosionsbeständigkeit der eingesetzten Apparaturen und die Reinheit der durch Ausfällung erhältlichen Lithiumsalze.

Dokument WO 2012/050317 A2 offenbart ein Verfahren zur hydrometallurgischen Rückgewinnung von Lithium. Nickel. Kobalt aus der Lithium-Übergangsmetalloxid haltigen Fraktion gebrauchter galvanischer Zellen. Ein Pulver enthaltend Lithium-Übergangsmetalloxide wird mit der Schwefelsäure mit einer Konzentration von 240 g/l oder mehr bei einem Feststoff zu Flüssigkeits- Verhältnis im Bereich von 75 bis 150 g/l und unter Zusatz vom Wasserstoffperoxid bei Temperaturen von 60 bis 80 °C gelaugt. Die Übergangsmetalle werden mittels Flüssig-Flüssig-Extraktion aus der Lösung zurückgewonnen. Lithium wird als Lithium-Karbonat ausgefällt.

Auch Dokument FR 2 796 207 A1 offenbart ein Verfahren zur hydrometallurgischen Rückgewinnung von Lithium. Nickel, Kobalt aus der Lithium-Übergangsmetalloxid haltigen Fraktion gebrauchter galvanischer Zellen. Ein Pulver mit einer Partikelgrösse bis 2 mm enthaltend Lithium-Übergangsmetalloxide wird mit der Salzsäure mit einer Konzentration von 2N bis 4N bei einem Feststoff zu Flüssigkeits-Verhältnis im Bereich von 200 bis 350 g/l bei der Raumtemperatur gelaugt. Die gebildete Lithiumchlorid und die Chloride der genannten Übergangsmetalle haltige Lösung wird abgetrennt und der verbleibende Rückstand wird gewaschen. Die abgetrennte Metallchlorid- und die Metallchlorid haltigen Wasch-Lösungen werden vereinigt und die Übergangsmetalle im pH-Wert-Bereich von 9,5 als Hydroxide ausgefällt. Die verbleibenden Lithiumchlorid Lösung wird mittels Elektrodialyse mit biploaren Membranen gereinigt und und als Lithium-Phosphat ausgefällt. Die Erfindung hat sich die Aufgabe gestellt, ein Verfahren anzugeben, das höchstmögliche Energieeffizienz bei der Extraktion des Lithiums bei gleichzeitig niedrigen Anforderungen hinsichtlich der Korrosionsbeständigkeit der eingesetzten Extraktionsapparatur und erhöhte Reinheit der erhaltenen Lithiumverbindungen sicherstellt.

Die gestellte Aufgabe wird gelöst durch ein Verfahren zur hydrometallurgischen Rückgewinnung von Lithium, Nickel, Kobalt aus der Lithium-Übergangsmetalloxid haltigen Fraktion gebrauchter galvanischer Zellen, bei dem eine Lithium-Übergangsmetalloxid haltige Fraktion, wobei es sich bei den Übergangsmetallen um Nickel, Kobalt und/oder Mangan handelt, mit einem Aluminiumgehalt bis 5 Gew.-% und einer Partikelgröße bis 500 µm in die bezogen auf den Oxidgehalt der Lithium-Übergangsmetalloxid haltigen Fraktion mindestens stöchiometrischen Menge Schwefelsäure mit einer Konzentration von 0,5 bis 4 mol/l und einem Feststoff zu Flüssigkeits-Verhältnis im Bereich von 20 bis 250 g/l eingebracht und unter Zusatz der gleichfalls bezogen auf den zu reduzierenden Übergangsmetallgehalt der Lithium-Übergangsmetalloxid haltigen Fraktion mindestens stöchiometrischen Menge Wasserstoffperoxid bei Temperaturen von 35 bis 70°C aufgeschlossen, die gebildete Lithiumsulfat und die Sulfate der genannten Übergangsmetalle haltigen Lösung abgetrennt und der verbleibende Rückstand mindestens zweimal gewaschen, die abgetrennte Sulfat- und die Sulfat haltigen Wasch-Lösungen vereinigt, die Übergangsmetalle im pH-Wert-Bereich von 9 bis 11 als Hydroxide ausgefällt, abgetrennt und gewaschen werden und die verbleibenden Lithiumsulfat haltigen Lösungen vereinigt sowie mittels Elektrodialyse mit bipolaren Membranen in Lithiumhydroxid umgewandelt wird.

Alternativ wird die Aufgabe gelöst durch ein Verfahren zur hydrometallurgischen Rückgewinnung von Lithium aus der Lithium-Übergangsmetalloxid haltigen Fraktion gebrauchter galvanischer Zellen, bei dem eine Lithium-Übergangsmetalloxid haltige Fraktion, wobei es sich bei den Mischoxiden um solche der Metalle Nickel, Kobalt und/oder Aluminium handelt, einer Partikelgröße bis 500 µm in die bezogen auf den Oxidgehalt der Lithium-Übergangsmetalloxid haltigen Fraktion mindestens stöchiometrischen Menge Schwefelsäure mit einer Konzentration von 0,5 bis 4 mol/l und einem Feststoff zu Flüssigkeits-Verhältnis im Bereich von 20 bis 300 g/l eingebracht und unter Zusatz der bezogen auf den zu reduzierenden Übergangsmetallgehalt der Lithium-Mischoxid haltigen Fraktion mindestens stöchiometrischen Menge Wasserstoffperoxid bei Temperaturen von 35 bis 70°C aufgeschlossen, die gebildete Lithiumsufat und die Sufate der genannten Übergangsmetalle haltige Lösung abgetrennt und der verbleibende Rückstand mindestens zweimal gewaschen, die abgetrennte Metallsufat- und die Metallsufat haltigen Wasch-Lösungen vereinigt, die Übergangsmetalle im pH-Wert-Bereich von 9 bis 11 als Hydroxide ausgefällt, abgetrennt und gewaschen werden und die verbleibenden Lithiumsulfat haltigen Lösungen vereinigt sowie mittels Elektrodialyse mit bipolaren Membranen in Lithiumhydroxid umgewandelt wird.

Die Aufgabe wird gleichfalls gelöst durch ein Verfahren zur hydrometallurgischen Rückgewinnung von Lithium aus der Lithium-Übergangsmetalloxid haltigen Fraktion gebrauchter galvanischer Zellen, bei dem eine Lithium-Übergangsmetalloxid haltige Fraktion, wobei es sich bei den Mischoxiden um solche der Metalle Nickel, Kobalt und/oder Aluminium handelt, einer Partikelgröße bis 500 µm in die bezogen auf den Oxidgehalt der Lithium-Übergangsmetalloxid haltigen Fraktion mindestens stöchiometrischen Menge Salzsäure mit einer Konzentration von 0,5 bis 4 mol/l und einem Feststoff zu Flüssigkeits-Verhältnis im Bereich von 10 bis 150 g/l eingebracht und unter Zusatz der bezogen auf den zu reduzierenden Übergangsmetallgehalt der Lithium-Mischoxid haltigen Fraktion mindestens stöchiometrischen Menge Wasserstoffperoxid bei Temperaturen von 35 bis 70°C aufgeschlossen, die gebildete Lithiumchlorid und die Chloride der genannten Übergangsmetalle haltige Lösung abgetrennt und der verbleibende Rückstand mindestens zweimal gewaschen, die abgetrennte Metallchlorid- und die Metallchlorid haltigen Wasch-Lösungen vereinigt, die Übergangsmetalle im pH-Wert-Bereich von 9 bis 11 als Hydroxide ausgefällt, abgetrennt und gewaschen werden und die verbleibenden Lithiumchlorid haltigen Lösungen vereinigt sowie mittels Elektrodialyse mit bipolaren Membranen in Lithiumhydroxid umgewandelt wird.

Überraschender Weise wurde gefunden, dass die Extraktion des Lithiums bereits nach sehr kurzer Reaktionszeit, bei niedrigen Temperaturen nahezu quantitativ abgeschlossen ist. Dadurch, dass die Reaktionswärme durch die Dosierung des Reduktionsmittels kontrolliert und sehr gering gehalten wird, kann eine quasi autokatalytische Zersetzung des Reduktionsmittels generell vermieden werden. Zur Extraktion des Lithiums müssen quasi nur stöchiometrische Mengen Reduktionsmittel eingesetzt werden.

Dabei wird unter den angegebenen milden, hydrometallurgischen Aufschlussbedingungen das enthaltene Lithium zu mehr als 99 Gew.-% in Lösung gebracht und zu mehr als 95 Gew.-% zurück gewonnen.

Wird eine Lithium-Übergangsmetalloxid haltige Fraktion mit einem Aluminiumgehalt bis 3 Gew.-%, vorzugsweise <1 Gew.-% eingesetzt. Damit wird das Entstehen einer zündfähigen Knallgasmischung weiter vermindert.

Vorzugsweise wird weiterhin der Gehalt an mehrwertigen Metallkationen mittels Ionenaustauscher reduziert. Der verminderte Gehalt an mehrwertigen Metallkationen wirkt sich insbesondere positiv auf eine weitere Prozessierung der Lösung mittels Elektrodialyse mit bipolaren Membranen aus, da hier diese Metallkationen als "Membrangifte" aufgrund ihrer Abscheidung in Form der Hydroxide in und auf den eingesetzten Membranen wirken.

Besonders bevorzugt weist die Lithium- Übergangsmetalloxid haltige Fraktion eine Partikelgröße bis 500 µm, vorzugsweise 100 bis 400 µm auf. Der Einsatz der genannten Partikelgröße verbessert das Aufschlussverhalten.

Vorteilhafter Weise wird die Schwefelsäure oder Salzsäure mit einer Konzentration von 0,75 bis 2,5 mol/l, vorzugsweise 1,0 bis 2,0 mol/l eingesetzt. Der Einsatz von Schwefelsäure oder Salzsäure im genannten Konzentrationsbereich vermindert die Anforderungen an die Korrosionsbeständigkeit der eingesetzten Apparaturen beträchtlich.

Besonders bevorzugt wird im Falle der NMC-Zellen und der Verwendung von Schwefelsäure das Feststoff zu Flüssigkeits-Verhältnis im Bereich von 30 bis 230 g/l, vorzugsweise 50 bis 180 g/l eingestellt. Im Falle der NCA-Zellen und der Verwendung von Schwefelsäure wird das Feststoff zu Flüssigkeits-Verhältnis bevorzugt im Bereich von 50 bis 250 g/l, vorzugsweise 60 bis 150 g/l eingestellt. Trotz des hohen Feststoffgehaltes in der Reaktionsmischung wird das enthaltene Lithium nahezu quantitativ in Lösung gebracht. Im Falle der NCA-Zellen und der Verwendung von Salzsäure wird das Feststoff zu Flüssigkeits-Verhältnis bevorzugt im Bereich von 15 bis 120 g/l, vorzugsweise 25 bis 65 g/l eingestellt.

Vorzugsweise wird der Aufschluss bei Temperaturen von 35 bis 65°C, vorzugsweise von 40 bis 60°C durchgeführt. Überraschender Weise wird dadurch die Effektivität des Herauslösens des Lithiums weder hinsichtlich der Zeitdauer noch der Menge wesentlich beeinflusst. Der genannte Temperaturbereich ist mit einfachen anlagentechnischen Mitteln einstellbar.

Vorteilhafter Weise wird der Aufschlussrückstand mindestens dreimal gewaschen. Es wurde gefunden, dass damit mehr als 95 Gew.-% des enthaltenen Lithiums erhalten werden kann.

Vorzugsweise werden die Schwefelsäure oder die Salzsäure und/oder das Wasserstoffperoxid im Überschuss eingesetzt. Besonders bevorzugt werden 0,1 bis 10 Mol-% Überschuss, vorzugsweise 0,5 bis 5 Mol- % Überschuss eingesetzt.

Das nach dem Verfahren hergestellte Produkt ist hinsichtlich seiner Reinheit für die Produktion von Lithium-Übergangsmetalloxiden oder Lithium-Übergangsmetallphosphaten geeignet und kann vorzugsweise zur Herstellung von Aktivmaterialien zur Verwendung in Kathoden von Lithium-Ionen-Batterien eingesetzt werden.

Im Folgenden wird der erfindungsgemäße Prozess allgemein beschrieben.

### Beispiele

Die Erfindung wird anhand der nachfolgenden Beispiele und der Tabelle 1 bis 3 erläutert.

Unter den in Tabelle 1 angegebenen Bedingungen wurden 11 Versuche unter den angegebenen Bedingungen mit einer Lithium-Übergangsmetalloxid haltigen Fraktion von NMC-Zellen durchgeführt.

Unter den in Tabelle 2 angegebenen Bedingungen wurden 6 Versuche mit Lithium-Übergangsmetalloxid haltigen Fraktionen von NCA-Zellen durchgeführt.

Unter den in Tabelle 3 angegebenen Bedingungen wurden 3 Versuche mit einer Lithium-Übergangsmetalloxid haltigen Fraktion von NMC-Zellen durchgeführt.

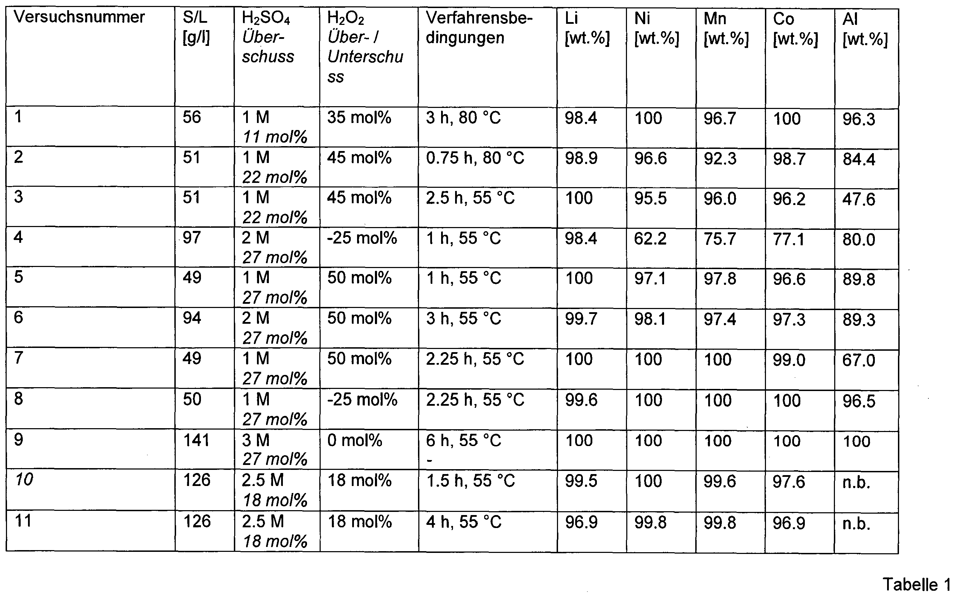

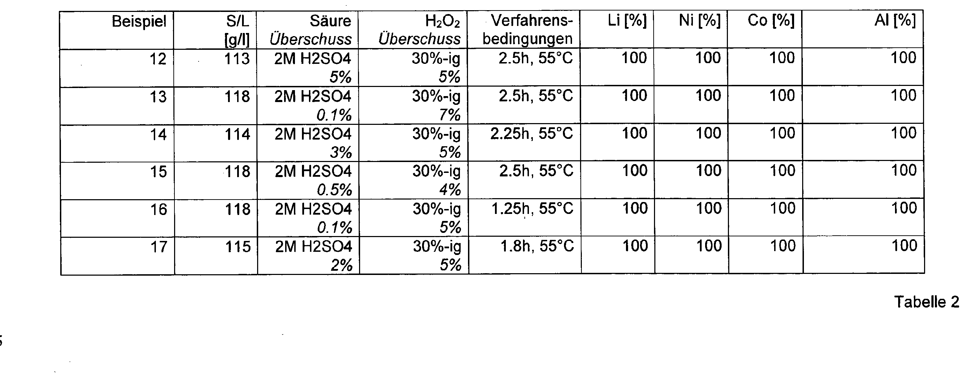

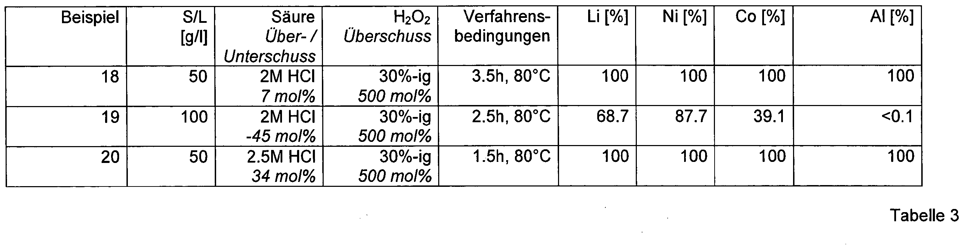

## Patentansprüche

1. Verfahren zur hydrometallurgischen Rückgewinnung von Lithium, Nickel, Kobalt aus der Lithium-Übergangsmetalloxid haltigen Fraktion gebrauchter galvanischer Zellen, **dadurch gekennzeichnet, dass** eine Lithium-Übergangsmetalloxid haltige Fraktion, wobei es sich bei den Übergangsmetallen um Nickel, Kobalt und/oder Mangan handelt, mit einem Aluminiumgehalt bis 5 Gew.-% und einer Partikelgröße bis 500 µm in die bezogen auf den Oxidgehalt der Lithium-Übergangsmetalloxid haltigen Fraktion mindestens stöchiometrischen Menge Schwefelsäure mit einer Konzentration von 0,5 bis 4 mol/l und einem Feststoff zu Flüssigkeits-Verhältnis im Bereich von 20 bis 250 g/l eingebracht und unter Zusatz der gleichfalls bezogen auf den zu reduzierenden Übergangsmetallgehalt der Lithium-Übergangsmetalloxid haltigen Fraktion mindestens stöchiometrischen Menge Wasserstoffperoxid bei Temperaturen von 35 bis 70°C aufgeschlossen, die gebildete Lithiumsulfat und die Sulfate der genannten Übergangsmetalle haltige Lösung abgetrennt und der verbleibende Rückstand mindestens zweimal gewaschen, die abgetrennte Sulfat- und die Sulfat haltigen Wasch-Lösungen vereinigt, die Übergangsmetalle im pH-Wert-Bereich von 9 bis 11 als Hydroxide ausgefällt, abgetrennt und gewaschen werden und die verbleibenden Lithiumsulfat haltigen Lösungen vereinigt sowie mittels Elektrodialyse mit bipolaren Membranen in Lithiumhydroxid umgewandelt wird.

2. Verfahren zur hydrometallurgischen Rückgewinnung von Lithium, Nickel, Kobalt aus der Lithium-Mischoxid haltigen Fraktion gebrauchter galvanischer Zellen, **dadurch gekennzeichnet, dass** eine Lithium-Übergangsmetalloxid haltige Fraktion, wobei es sich bei den Mischoxiden um solche der Metalle Nickel, Kobalt und/oder Aluminium handelt, einer Partikelgröße bis 500 µm in die bezogen auf den Oxidgehalt der Lithium-Übergangsmetalloxid haltigen Fraktion mindestens stöchiometrischen Menge Schwefelsäure mit einer Konzentration von 0,5 bis 4 mol/l und einem Feststoff zu Flüssigkeits-Verhältnis im Bereich von 20 bis 300 g/l eingebracht und unter Zusatz der bezogen auf den zu reduzierenden Übergangsmetallgehalt der Lithium-Mischoxid haltigen Fraktion mindestens stöchiometrischen Menge Wasserstoffperoxid bei Temperaturen von 35 bis 70°C aufgeschlossen, die gebildete Lithiumsufat und die Sufate der genannten Übergangsmetalle haltige Lösung abgetrennt und der verbleibende Rückstand mindestens zweimal gewaschen, die abgetrennte Metallsufat- und die Metallsufat haltigen Wasch-Lösungen vereinigt, die Übergangsmetalle im pH-Wert-Bereich von 9 bis 11 als Hydroxide ausgefällt, abgetrennt und gewaschen werden und die verbleibenden Lithiumsulfat haltigen Lösungen vereinigt sowie mittels Elektrodialyse mit bipolaren Membranen in Lithiumhydroxid umgewandelt wird.

3. Verfahren zur hydrometallurgischen Rückgewinnung von Lithium, Nickel, Kobalt aus der Lithium-Mischoxid haltigen Fraktion gebrauchter galvanischer Zellen, **dadurch gekennzeichnet, dass** eine Lithium-Übergangsmetalloxid haltige Fraktion, wobei es sich bei den Mischoxiden um solche der Metalle Nickel, Kobalt und/oder Aluminium handelt, einer Partikelgröße bis 500 µm in die bezogen auf den Oxidgehalt der Lithium-Übergangsmetalloxid haltigen Fraktion mindestens stöchiometrischen Menge Salzsäure mit einer Konzentration von 0,5 bis 4 mol/l und einem Feststoff zu Flüssigkeits-Verhältnis im Bereich von 10 bis 150 g/l eingebracht und unter Zusatz der bezogen auf den zu reduzierenden Übergangsmetallgehalt der Lithium-Mischoxid haltigen Fraktion mindestens stöchiometrischen Menge Wasserstoffperoxid bei Temperaturen von 35 bis 70°C aufgeschlossen, die gebildete Lithiumchlorid und die Chloride der genannten Übergangsmetalle haltige Lösung abgetrennt und der verbleibende Rückstand mindestens zweimal gewaschen, die abgetrennte Metallchlorid- und die Metallchlorid haltigen Wasch-Lösungen vereinigt, die Übergangsmetalle im pH-Wert-Bereich von 9 bis 11 als Hydroxide ausgefällt, abgetrennt und gewaschen werden und die verbleibenden Lithiumchlorid haltigen Lösungen vereinigt sowie mittels Elektrodialyse mit biploaren Membranen in Lithiumhydroxid umgewandelt wird.

4. Verfahren nach Anspruch 1, **dadurch gekennzeichnet, dass** eine Lithium-Übergangsmetalloxid haltige Fraktion mit einem Aluminiumgehalt bis 3 Gew.-%, vorzugsweise <1 Gew.-% eingesetzt wird.

5. Verfahren nach Anspruch 1, 2 oder 3, **dadurch gekennzeichnet, dass** der Gehalt an mehrwertigen Metallkationen mittels Ionenaustauscher reduziert wird.

6. Verfahren nach Anspruch 1, 2 oder 3, **dadurch gekennzeichnet, dass** die Lithium-Übergangsmetalloxid haltige Fraktion eine Partikelgröße bis 500 µm, vorzugsweise 100 bis 400 µm aufweist.

7. Verfahren nach Anspruch 1 oder 2, **dadurch gekennzeichnet, dass** die Schwefelsäure mit einer Konzentration von 0,75 bis 2,5 mol/l, vorzugsweise 1,0 bis 2,0 mol/l eingesetzt wird.

8. Verfahren nach Anspruch 3, **dadurch gekennzeichnet, dass** die Salzsäure mit einer Konzentration von 0,75 bis 2,5 mol/l, vorzugsweise 1,0 bis 2,0 mol/l eingesetzt wird.

9. Verfahren nach Anspruch 1, **dadurch gekennzeichnet, dass** das Feststoff zu Flüssigkeits-Verhältnis im Bereich von 30 bis 230 g/l, vorzugsweise 50 bis 180 g/l eingestellt wird.

10. Verfahren nach Anspruch 2, **dadurch gekennzeichnet, dass** das Feststoff zu Flüssigkeits-Verhältnis im Bereich von 50 bis 250 g/l, vorzugsweise 60 bis 150 g/l eingestellt wird.

11. Verfahren nach Anspruch 3, **dadurch gekennzeichnet, dass** das Feststoff zu Flüssigkeits-Verhältnis im Bereich von 15 bis 120 g/l, vorzugsweise 25 bis 65 g/l eingestellt wird.

12. Verfahren nach Anspruch 1, 2 oder 3, **dadurch gekennzeichnet, dass** der Aufschluss bei Temperaturen von 35 bis 65°C, vorzugsweise von 40 bis 60°C durchgeführt wird.

13. Verfahren nach Anspruch 1, 2 oder 3, **dadurch gekennzeichnet, dass** der Aufschlussrückstand mindestens dreimal gewaschen wird.

14. Verfahren nach Anspruch 1, 2 oder 3, **dadurch gekennzeichnet, dass** Schwefelsäure und/oder das Wasserstoffperoxid im Überschuss eingesetzt werden.

15. Verfahren nach Anspruch 14, **dadurch gekennzeichnet, dass** 0,1 bis 10 Mol-% Überschuss, vorzugsweise 0,5 bis 5 Mol- % Überschuss eingesetzt werden.

## Claims

1. A method for the hydrometallurgical recovery of lithium, nickel, cobalt from the lithium transition metal oxide containing fraction of used galvanic cells, **characterized in that** a lithium transition metal oxide containing fraction, wherein the transition metals are nickel, cobalt, and/or manganese having an aluminum content of up to 5% by weight and a particle size of up to 500 µm, is introduced into an at least stoichiometric quantity of sulfuric acid, based on the oxide content of the lithium transition metal oxide containing fraction, having a concentration of from 0.5 to 4 mol/L and a solid to liquid ratio ranging from 20 to 250 g/L; and solubilized at temperatures ranging from 35 to 70°C, with the addition of at least a stoichiometric quantity of hydrogen peroxide, likewise based on the transition metal content to be reduced of the lithium transition metal oxide containing fraction; the formed lithium sulfate and the sulfates of the aforementioned solution containing transition metals are separated, and the remaining residue is washed at least twice; the separated sulfate and sulfate-containing wash solutions are combined; the transition metals in a pH range from 9 to 11 are precipitated out as hydroxides, separated, and washed; and the remaining solutions containing lithium sulfate are combined and converted to lithium hydroxide by means of electrodialysis with bipolar membranes.

2. A method for the hydrometallurgical recovery of lithium, nickel, cobalt from the lithium transition metal oxide containing fraction of used galvanic cells containing lithium mixed oxide, **characterized in that** a lithium transition metal oxide containing fraction, wherein the mixed oxides are those of the metals nickel, cobalt, and/or aluminum having a particle size of up to 500 µm, is introduced into an at least stoichiometric quantity of sulfuric acid, based on the oxide content of the lithium transition metal oxide containing fraction, having a concentration ranging from 0.5 to 4 mol/L and a solid to liquid ratio ranging from 20 to 300 g/L; and solubilized at temperatures ranging from 35 to 70°C, with the addition of at least a stoichiometric quantity of hydrogen peroxide, based on the transition metal content to be reduced of the lithium transition metal oxide containing fraction; the formed lithium sulfate and the sulfates of the aforementioned solution containing transition metals are separated, and the remaining residue is washed at least twice; the separated sulfate and sulfate-containing wash solutions are combined; the transition metals in a pH range from 9 to 11 are precipitated out as hydroxides, separated, and washed; and the remaining solutions containing lithium sulfate are combined and converted to lithium hydroxide by means of electrodialysis with bipolar membranes.

3. A method for the hydrometallurgical recovery of lithium, nickel, cobalt from the lithium transition metal oxide containing fraction of used galvanic cells, **characterized in that** a lithium transition metal oxide containing fraction, wherein the mixed oxides are those of the metals nickel, cobalt, and/or aluminum, having a particle size of up to 500 µm, is introduced into an at least stoichiometric quantity of hydrochloric acid, based on the oxide content of the lithium transition metal oxide containing fraction, having a concentration ranging from 0.5 to 4 mol/L and a solid to liquid ratio ranging from 10 to 150 g/L; and solubilized at temperatures ranging from 35 to 70°C, with the addition of at least a stoichiometric quantity of hydrogen peroxide, based on the transition metal content to be reduced of the lithium transition metal oxide containing fraction; the formed lithium chloride and the chlorides of the aforementioned solution containing transition metals are separated, and the remaining residue is washed at least twice; the separated metal chloride and metal-chloride-containing wash solutions are combined; the transition metals in a pH range from 9 to 11 are precipitated out as hydroxides, separated, and washed; and the remaining solutions containing lithium chloride are combined and converted to lithium hydroxide by means of electrodialysis with bipolar membranes.

4. The method according to claim 1, **characterized in that** a lithium transition metal oxide containing fraction is used having an aluminum content of up to 3% by weight, or preferably < 1 % by weight.

5. The method according to claim 1, 2, or 3, **characterized in that** the content of polyvalent metal cations is reduced by means of an ion exchanger.

6. The method according to claim 1, 2, or 3, **characterized in that** lithium transition metal oxide containing fraction has a particle size of up to 500 µm , preferably 100 to 400 µm.

7. The method according to claim 1 or 2, **characterized in that** the sulfuric acid is used having a concentration ranging from 0.75 to 2.5 mol/L, preferably 1.0 to 2.0 mol/L.

8. The method according to claim 3, **characterized in that** the hydrochloric acid is used having a concentration ranging from 0.75 to 2.5 mol/L, preferably 1.0 to 2.0 mol/L.

9. The method according to claim 1, **characterized in that** the solid to liquid ratio is set in a range from 30 to 230 g/L, preferably 50 to 180 g/L.

10. The method according to claim 2, **characterized in that** the solid to liquid ratio is set in a range from 50 to 250 g/L, preferably 60 to 150 g/L.

11. The method according to claim 3, **characterized in that** the solid to liquid ratio is set in a range from 15 to 120 g/L, preferably 25 to 65 g/L.

12. The method according to claim 1, 2, or 3, **characterized in that** the solubilizing is carried out at temperatures ranging from 35 to 65°C, preferably of from 40 to 60°C.

13. The method according to claim 1, 2, or 3, **characterized in that** the solubilized residue is washed at least three times.

14. The method according to claim 1, 2, or 3, **characterized in that** sulfuric acid and/or the hydrogen peroxide are added to excess.

15. The method according to claim 14, **characterized in that** 0.1 to 10 mol% excess, preferably 0.5 to 5 mol% excess, is used.

## Revendications

1. Procédé de récupération hydrométallurgique de lithium, de nickel et de cobalt à partir de la fraction de cellules galvaniques usagées contenant de l'oxyde de métaux de transition de lithium, **caractérisé en ce qu'**une fraction contenant de l'oxyde de métaux de transition de lithium, le nickel, le cobalt et/ou le manganèse étant des métaux de transition, avec une teneur en aluminium jusqu'à 5 % en poids et une taille de particules jusqu'à 500 µm est introduite dans l'au moins quantité stoechiométrique d'acide sulfurique avec une concentration de 0,5 à 4 mol/l et un ratio solide/liquide dans la plage de 20 à 250 g/l par rapport à la teneur d'oxyde de la fraction contenant de l'oxyde de métaux de transition de lithium, et ouverte à des températures de 35 à 70 °C en ajoutant l'au moins quantité stoechiométrique du peroxyde d'hydrogène également par rapport à la teneur de métaux de transition à diminuer de la fraction contenant de l'oxyde de métaux de transition de lithium, le sulfate de lithium formé et les sulfates de ladite solution contenant des métaux de transition sont séparés et le résidu restant est lavé au moins deux fois, les solutions de lavage contenant des sulfates séparés et du sulfate sont combinés, les métaux de transition sont précipités, séparés et lavés comme hydroxyde dans une plage de pH de 9 à 11 et les solutions contenant du sulfate de lithium restantes sont combinées ainsi que converties en hydroxyde de lithium avec des membranes bipolaires au moyen d'une électrodialyse.

2. Procédé de récupération hydrométallurgique de lithium, de nickel et de cobalt à partir de la fraction de cellules galvaniques usagées contenant de l'oxyde de métaux de transition de lithium, **caractérisé en ce qu'**une fraction contenant de l'oxyde de métaux de transition de lithium, les oxydes mixtes étant ceux des métaux nickel, cobalt et/ou aluminium, avec une taille de particules jusqu'à 500 µm est introduite dans l'au moins quantité stoechiométrique d'acide sulfurique avec une concentration de 0,5 à 4 mol/l et un ratio solide/liquide dans la plage de 20 à 300 g/l par rapport à la teneur d'oxyde de la fraction contenant de l'oxyde de métaux de transition de lithium, et ouverte à des températures de 35 à 70 °C en ajoutant l'au moins quantité stoechiométrique du peroxyde d'hydrogène par rapport à la teneur de métaux de transition à diminuer de la fraction contenant de l'oxyde mixte de lithium, le sulfate de lithium formé et les sulfates de ladite solution contenant des métaux de transition sont séparés et le résidu restant est lavé au moins deux fois, les solutions de lavage contenant des sulfates séparés et du sulfate sont combinés, les métaux de transition sont précipités, séparés et lavés comme hydroxyde dans une plage de pH de 9 à 11 et les solutions contenant du sulfate de lithium restantes sont combinées ainsi que converties en hydroxyde de lithium avec des membranes bipolaires au moyen d'une électrodialyse.

3. Procédé de récupération hydrométallurgique de lithium, de nickel et de cobalt à partir de la fraction de cellules galvaniques usagées contenant de l'oxyde de métaux de transition de lithium, **caractérisé en ce qu'**une fraction contenant de l'oxyde de métaux de transition de lithium, les oxydes mixtes étant ceux des métaux nickel, cobalt et/ou aluminium, avec une taille de particules jusqu'à 500 µm est introduite dans l'au moins quantité stoechiométrique d'acide chloridrique avec une concentration de 0,5 à 4 mol/l et un ratio solide/liquide dans la plage de 10 à 150 g/l par rapport à la teneur d'oxyde de la fraction contenant de l'oxyde de métaux de transition de lithium et ouverte à des températures de 35 à 70 °C en ajoutant l'au moins quantité stoechiométrique du peroxyde d'hydrogène par rapport à la teneur de métaux de transition à diminuer de la fraction contenant de l'oxyde mixte de lithium, le chlorure de lithium formé et les chlorures de ladite solution contenant des métaux de transition sont séparés et le résidu restant est lavé au moins deux fois, les solutions de lavage contenant des chlorures métalliques séparés et du chlorure sont combinés, les métaux de transition sont précipités, séparés et lavés comme hydroxyde dans une plage de pH de 9 à 11 et les solutions contenant du chlorure de lithium restantes sont combinées ainsi que converties en hydroxyde de lithium avec des membranes bipolaires au moyen d'une électrodialyse.

4. Procédé selon la revendication 1, **caractérisé en ce qu'**une fraction contenant de l'oxyde de métaux de transition de lithium est utilisée avec une teneur en aluminium jusqu'à 3 % en poids, de préférence <1 % en poids.

5. Procédé selon la revendication 1, 2 ou 3, **caractérisé en ce que** la teneur en cations de métaux multivalents est réduite au moyen d'échangeurs d'ions.

6. Procédé selon la revendication 1, 2 ou 3, **caractérisé en ce que** la fraction contenant de l'oxyde de métaux de transition de lithium présente une taille de particules jusqu'à 500 µm, de préférence 100 à 400 µm.

7. Procédé selon la revendication 1 ou 2, **caractérisé en ce que** l'acide sulfurique est utilisée avec une concentration de 0,75 à 2,5 mol/l, de préférence de 1,0 à 2,0 mol/l.

8. Procédé selon la revendication 3, **caractérisé en ce que** l'acide chlorhydrique est utilisée avec une concentration de 0,75 à 2,5 mol/l, de préférence de 1,0 à 2,0 mol/l.

9. Procédé selon la revendication 1, **caractérisé en ce que** le ratio solide/liquide est réglé dans la plage de 30 à 230 g/l, de préférence de 50 à 180 g/l.

10. Procédé selon la revendication 2, **caractérisé en ce que** le ratio solide/liquide est réglé dans la plage de 50 à 250 g/l, de préférence de 60 à 150 g/l.

11. Procédé selon la revendication 3, **caractérisé en ce que** le ratio solide/liquide est réglé dans la plage de 15 à 120 g/l, de préférence de 25 à 65 g/l.

12. Procédé selon la revendication 1, 2 ou 3, **caractérisé en ce que** la décomposition s'effectue à des températures de 35 à 65 °C, de préférence de 40 à 60 °C.

13. Procédé selon la revendication 1, 2 ou 3, **caractérisé en ce que** le résidu de décomposition est lavé au moins trois fois.

14. Procédé selon la revendication 1, 2 ou 3, **caractérisé en ce que** l'acide sulfurique et/ou le peroxyde d'hydrogène sont utilisés en excédent.

15. Procédé selon la revendication 14, **caractérisé en ce qu'**un excédent de 0,1 à 10 % en moles, de préférence de 0,5 à 5 % en moles est utilisé.
